# EUROPEAN PATENT SPECIFICATION

(11) **EP 2 684 123 B1**
(45) Date of publication and mention of the grant of the patent: **01.02.2017**
(21) Application number: 11861151.6
(22) Date of filing: 29.12.2011
(51) Int. Cl.: G06F 12/10, G06F 9/06, G06F 9/30, G06F 13/14, G06F 12/08

(54) **IMPLEMENTING TLB SYNCHRONIZATION FOR SYSTEMS WITH SHARED VIRTUAL MEMORY BETWEEN PROCESSING DEVICES**
IMPLEMENTIERUNG VON TLB-SYNCHRONISATION FÜR SYSTEME MIT GEMEINSAM GENUTZTEM VIRTUELLEM SPEICHER ZWISCHEN PROZESSOREN
MISE EN OEUVRE D'UNE SYNCHRONISATION DE RÉPERTOIRE DES PAGES ACTIVES (TRANSLATION LOOK-ASIDE BUFFER - TLB) POUR SYSTÈMES À MÉMOIRE VIRTUELLE PARTAGÉE ENTRE DES DISPOSITIFS DE TRAITEMENT

(30) Priority: 11.03.2011 US 201113045688
(43) Date of publication of application: 15.01.2014
(73) Proprietor: Intel Corporation, Santa Clara, CA 95054 (US)
(72) Inventor: GINZBURG, Boris, 34814 Haifa (IL); NATANZON, Esfir, 33405 Haifa (IL); OSADCHIY, Ilya, 32000 Haifa (IL); RONEN, Ronny, 34988 Haifa (IL); WEISSMANN, Eliezer, 34995 Haifa (IL); ZACH, Yoav, 37091 Pardes Hana Karkur (IL); FARRELL, Robert L., Granite Bay, California 95746 (US)
(74) Representative: Goddar, Heinz J.
(86) International application number: PCT/US2011/067968
(87) International publication number: WO 2012/125202

(56) References cited:
- WO-A2-02/086730
- US-A1- 2004 088 707
- US-A1- 2004 133 760
- US-A1- 2006 015 706
- US-A1- 2010 161 875
- US-B1- 6 286 092
- BLACK D L ET AL: "TRANSLATION LOOKASIDE BUFFER CONSISTENCY: A SOFTWARE APPRAOCH", ASPLOS. PROCEEDINGS. INTERNATIONAL CONFERENCE ON ARCHITECTURALSUPPORT FOR PROGRAMMING LANGUAGES AND OPERATING SYSTEMS, NEW YORK, NY, US, 1 January 1989 (1989-01-01), pages 113-122, XP000400758,

## Description

### Background

This relates generally to synchronization of translation look-aside buffers between central processing units (CPU) and other processing devices, such as graphics processing units.

A translation look-aside buffer (TLB) is a central processing unit cache that a memory management unit (MMU) uses to improve virtual address translation speed. When the MMU should translate a virtual to physical address, it looks first into the TLB. If the requested address is present in the TLB, then the retrieved physical address can be used to access memory. This is called a TLB hit. If the requested address is not in the TLB, it is a miss, and the translation proceeds by looking up the page table in a process called a page walk. The page walk is an expensive process, as it involves reading the contents of multiple memory locations and using them to compute the physical address. After the physical address is determined by the page walk, the virtual address to physical address mapping is entered into the TLB.

In conventional systems, separate page tables are used by the central processing unit and the graphics processing unit. The operating system manages the host page table used by the central processing unit and a graphics processing unit driver manages the page table used by the graphics processing unit. The graphics processing unit driver copies data from user space into the driver memory for processing on the graphics processing unit. Complex data structures are repacked into an array when pointers are replaced by offsets.

The overhead related to copying and repacking limits graphics processing unit applications where data is represented as arrays. Thus, graphics processing units may be of limited value in some applications, including those that involve complex data structures such as databases.

The article "Translation look-aside buffer consistency: A software approach" by D. L. Black et al., ASPLOS, Proceedings, International Conference on Architectural Support for Programming Languages and Operating Systems, New York, US, 1 January 1989, pages 113-122 discloses the translation look-aside buffer (TLB) consistency problem for multi-processors, and introduces the Mach-shoot-down algorithm for maintaining TLB consistency in software. The use of shared memory implies the need to consistently manage several important aspects of multiprocessor states: the instructions and data caches used to funnel information to each CPU and the address translation look-aside buffers (TLBs) which provide page-level virtual-to-physical mappings. The Mach-shoot-down algorithm and its implementations demonstrate that translation buffer consistency can be implemented in software.

WO 02/086730 A2 discloses a multiprocessor system implementing virtual memory using a shared memory, and a page replacement method for maintaining paged memory coherence.

US 6,286,092 B1 discloses a page-based memory address translation table update method and apparatus that uses a first processor, such as a host processor or other processor, to notify a second processor to update its own page table.

### Summary of the Invention

The invention is defined according to the method of claim 1 and the apparatus of claim 11.

### Brief Description Of The Drawings

Figure 1 is a schematic depiction of one embodiment of the present invention;
Figure 2 is a flow chart for page fault handling in accordance with one embodiment of the present invention; and
Figure 3 is a system depiction for one embodiment.

### Detailed Description

In some embodiments, graphics processing applications may use complex data structures, such as databases, using a shared virtual memory model between one or more central processing units and a graphics processing unit on the same platform when they share page tables managed by the platform operating system. The use of shared virtual memory may reduce the overhead related to copying and repacking data from user space into drive memory on the graphics processing unit.

However, the operating system running on a host central processing unit may not be aware that the graphics processing unit is sharing virtual memory and so the host operating system may not provide for flushing translation look-aside buffers (TLB's). In some embodiments, a shared virtual memory manager on the host central processing unit handles the task of flushing the TLB's for the graphics processing unit.

A host operating system may manage page table entries for a plurality of processors in a multi-core system. Thus, when the operating system changes process page table entries, it flushes the translation look aside buffers for all the affected central processing units in the multi-core system. That operating system tracks, for each page table, which cores are using that page table at the moment, and flushes the translation look-aside buffers of those cores using the page table.

While the term graphics processing unit is used in the present application, it should be understood that the graphics processing unit may or may not be a separate integrated circuit. The present invention is applicable to situations where the graphics processing unit and the central processing unit are integrated into one integrated circuit.

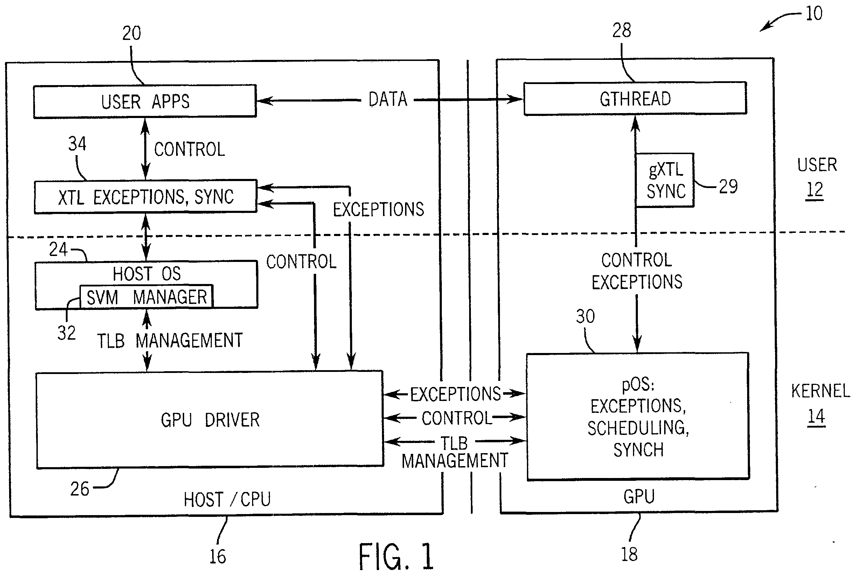

Referring to Figure 1, in the system 10, a host/central processing unit 16 communicates with the graphics processing unit 18. The host central processing unit 16 includes user applications 20 which provide control information to an extended Thread Library (XTL) 34. The library 34 is a pthread extension to create and manage user threads on the graphics processing unit 18. The library 34 then communicates exceptions and control information to the graphics processing unit driver 26. The library 34 also communicates with the host operating system 24.

As shown in Figure 1, the user level 12 includes the library 34 and the user applications 20, while the kernel level 14 includes a host operating system 24, and the graphics processing unit driver 26. The graphics processing unit driver 26 is a driver for the graphics processing unit even though that driver is resident in the central processing unit 16.

The graphics processing unit 18 includes, in user level 12, the gthread 28 which sends and receives control and exceptions messages to the operating system 30. A gthread is user code that runs on the graphics processing unit, sharing virtual memory with the parent thread running on the central processing unit. The operating system 30 may be a relatively small operating system, running on the graphics processing unit, that is responsible for graphics processing unit exceptions. It is a small relative to the host operating system 24, as one example.

User applications 20 include any user process that runs on the central processing unit 16. The user applications 20 spawn threads on the graphics processing unit 18.

The gthread or worker thread created on the graphics processing unit shares virtual memory with the parent thread. It behaves in the same way as a regular thread in that all standard inter-process synchronization mechanisms, such as Mutex and semaphore, can be used. Synchronization signals 29 may be passed between the library 34 and the gthread 28 via the GPU driver 26 and operating system 30.

The shared virtual memory (SVM) manager 32 on the host operating system 24 registers all SVM capable devices on the host, the graphics processing unit or other central processing units in multi-core environments. The manager 32 connects corresponding callbacks from operating system memory management (e.g. translation look-aside buffer (TLB) flushes) to drivers of SVM-capable devices.

In some embodiments, the parent thread and the graphics processing unit worker threads may share unpinned virtual memory. In some cases, the host operating system advises all of the central processing unit cores in a multi-core system when the host changes the process page table entries. But the graphics processing unit may also use the page table as well. With the conventional system, the graphics processing unit gets no notice of page table entry changes because the host operating system is not aware that the graphics processing unit is using the page table. Therefore, the host operating system cannot flush the graphics processing unit's translation look-aside buffer.

Instead, an operating system service, called the shared virtual memory manager 32, keeps track of all shared virtual memory devices that use the monitored page table. The shared virtual memory manager notifies each current page table user when the page table change happens, as indicated by arrows labeled TLB Management in Figure 1.

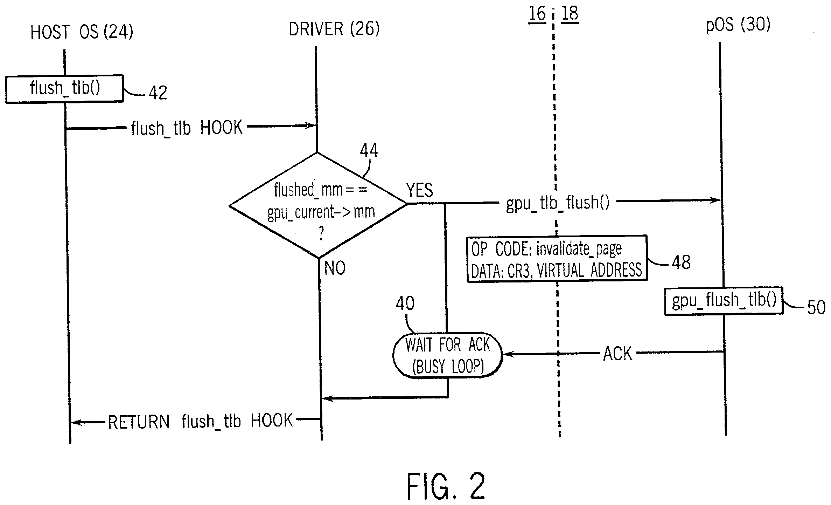

Referring to Figure 2, the page fault handling algorithms may be implemented in hardware, software and/or firmware. In software embodiments, the algorithms may be implemented as computer executable instructions stored on a non-transitory computer readable medium, such as optical, semiconductor, or magnetic memory. In Figure 2, the flows for the host operating system 24, driver 26 of the central processing unit 16, and the operating system 30 in the graphics processing unit 18 are shown as parallel vertical flow paths with interactions between them indicated by a generally horizontal arrows.

Referring to Figure 2, the host operating system 24 calls a translation look aside buffer (TLB) flush routine at block 42. That routine flushes the TLBs of other central processing unit cores as needed. Then the host operating system activates callbacks to all drivers of shared virtual memory devices, one by one. For example, the flush_tlb hook is sent from the host operating system 24 to the driver 26 to activate callbacks for the graphics processing unit. At diamond 44, the driver checks to see if any active task has the same memory manager as the one that was flushed. If not, it simply returns the flush_tlb hook. If so, it sends a message gpu_tlb_flush() to the graphics processing unit operating system 30. That message 48 includes an op code to invalidate the page and data including the control register 3 (CR3) and virtual address. The control register 3 is X86 architecture specific and translates virtual addresses into physical addresses. However, corresponding operators can be used in other architectures.

The operating system 30 then does the graphics processing unit flush, as indicated at block 50, and provides an acknowledge (ACK) back to the driver 26. The driver 26 waits for the acknowledge at oval 40 and then returns to normal operations upon receipt of the acknowledge.

As a result, TLB coherency can be preserved for combined central processing unit and graphics processing unit shared virtual memory with common page tables managed by the host operating system through an extension of an existing operating system virtual memory mechanism. This solution does not require page pinning in some embodiments.

While the embodiment described above refers to graphics processing units, the same technique can be used for other processing units which are not recognized by the host central processing unit that typically manages the TLB flushing.

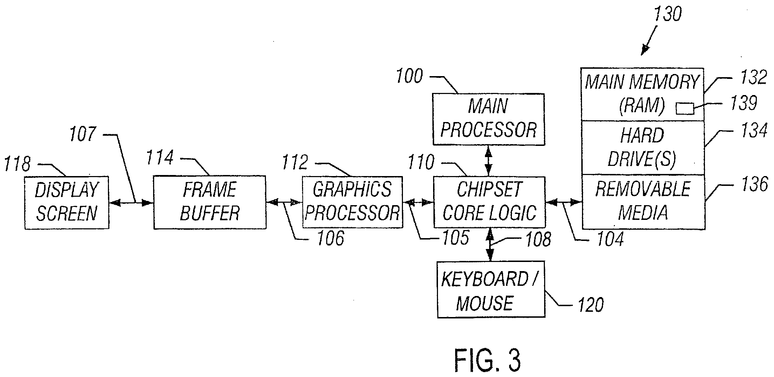

The computer system 130, shown in Figure 3, may include a hard drive 134 and a removable medium 136, coupled by a bus 104 to a chipset core logic 110. A keyboard and mouse 120, or other conventional components, may be coupled to the chipset core logic via bus 108. The core logic may couple to the graphics processor 112, via a bus 105, and the central processor 100 in one embodiment. In a multi-core embodiment, a plurality of central processing units may be used. The operating system of one core may then be deemed the host operating system.

The graphics processor 112 may also be coupled by a bus 106 to a frame buffer 114. The frame buffer 114 may be coupled by a bus 107 to a display screen 118. In one embodiment, a graphics processor 112 may be a multi-threaded, multi-core parallel processor using single instruction multiple data (SIMD) architecture.

In the case of a software implementation, the pertinent code may be stored in any suitable semiconductor, magnetic, or optical memory, including the main memory 132 (as indicated at 139) or any available memory within the graphics processor. Thus, in one embodiment, the code to perform the sequences of Figure 2 may be stored in a non-transitory machine or computer readable medium, such as the memory 132, and/or the graphics processor 112, and/or the central processor 100 and may be executed by the processor 100 and/or the graphics processor 112 in one embodiment.

Figure 2 is a flow chart. In some embodiments, the sequences depicted in this flow chart may be implemented in hardware, software, or firmware. In a software embodiment, a non-transitory computer readable medium, such as a semiconductor memory, a magnetic memory, or an optical memory may be used to store instructions and may be executed by a processor to implement the sequences shown in Figure 2.

The graphics processing techniques described herein may be implemented in various hardware architectures. For example, graphics functionality may be integrated within a chipset. Alternatively, a discrete graphics processor may be used. As still another embodiment, the graphics functions may be implemented by a general purpose processor, including a multicore processor.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

## Claims

1. A method comprising:
sharing unpinned virtual memory between a first (16) and a second (18) processing unit, using the first processing unit (16) to:
track changes to entries in a page table,
determine when the second processing unit (18) is using the page table,
notify said second processing unit (18) when a page table entry changes, and flush translation look-aside buffers (hereafter: TLBs) on the second processing unit (18);
wherein a host operating system (24) of the first processing unit (16) calls a TLB flush routine, the routine being adapted to flush the TLBs of at least one other central processing unit core;
the host operating system (24) sends a flush tlb hook to a driver (26) of the first processing unit (16) to activate callbacks for the second processing unit (18);
the driver (26) of the first processing unit (16) checks if any active task has the same memory manager as the one that was flushed and, if not, returns the flush tlb hook otherwise, if so, sends a message (48) to the operating system (30) of the second processing unit (18), wherein the message (48) includes an op code to invalidate the page and data; and
wherein the operating system (30) of the second processing unit (18) performs the second processing unit (18) flush.

2. The method of claim 1, including sharing the page table between said first (16) and second (18) processing units,

3. The method of claim 2, including managing said page table using an operating system of said first processing unit (16).

4. The method of claim 1, including using an operating system of said first processing unit (16) to track said changes to a page table entry and to notify the second processing unit (18) when a page table entry changes.

5. The method of claim 1, wherein determining when the second processing unit (18) is using the page table includes determining when a graphics processing unit is using the page table.

6. The method of claim 1, including using a shared virtual memory manager (32) to notify said second processing unit (18).

7. A non-transitory computer-readable medium storing computer-executable instructions to enable a first processing unit (16) to execute the method according to claim 1.

8. The medium of claim 7, further storing computer-executable instructions to share the page table between said first (16) and said second (18) processing units.

9. The medium of claim 8, further storing computer-executable instructions to track page table changes using a shared virtual memory and to report those changes to a graphics processing unit.

10. The medium of claim 7, further storing computer-executable instructions for using a shared virtual memory manager to notify said second processing unit (18).

11. An apparatus comprising:
a unpinned virtual memory;
a first processing unit 16) configured to track changes to entries in a page table, determine when a second processing unit (18) is using the page table, notify said second processing unit (18) when a page table entry changes and flush translation look-aside buffers (hereafter: TLBs) on the second processing unit (18); wherein
a host operating system (24) of the first processing unit (16) is configured to call a TLB flush routine, the routine being adapted to flush the TLBs of at least one other central processing unit core;
the host operating system (24) is configured to send a flush tlb hook to a driver (26) of the first processing unit (16) to activate callbacks for the second processing unit (18);
the driver (26) of the first processing unit (16) is configured to check if any active task has the same memory manager as the one that was flushed and, if not, to return the flush tlb hook otherwise, if so, to send a message (48) to the operating system (30) of the second processing unit (18), wherein the message (48) includes an op code to invalidate the page and data; and wherein
the operating system (30) of the second processing unit (18) is configured to perform the second processing unit (18) flush; and
a memory coupled to said first processing unit (16).

12. The apparatus of claim 11, wherein said first processing unit (16) is a central processing unit.

13. The apparatus of claim 11, wherein said second processing unit (18) is a graphics processing unit.

14. The apparatus of claim 11, wherein said first processing unit (16) is configured to share the page table between said first processing unit (16) and said second processing unit (18).

15. The apparatus of claim 12, wherein said first processing unit (16) is configured to manage said shared page table and comprises an operating system that is configured to track said changes and to notify said second processing unit (18) when a page table entry changes.

16. The apparatus of claim 11, including a shared virtual memory manager that is configured to notify said second processing unit (18).

## Patentansprüche

1. Verfahren, das Folgende umfasst:
gemeinsames Nutzen von losgelöstem virtuellem Speicher zwischen einer ersten (16) und einer zweiten (18) Verarbeitungseinheit,
Verwenden der ersten Verarbeitungseinheit (16) zum:
Verfolgen von Änderungen an Einträgen in einer Page-Tabelle, Bestimmen, wann die zweite Verarbeitungseinheit (18) die Page-Tabelle verwendet,
Benachrichtigen der zweiten Verarbeitungseinheit (18), wenn sich ein Page-Tabellen-Eintrag ändert, und
Spülen eines Übersetzungspuffers (im Folgenden: TLB) auf der zweiten Verarbeitungseinheit (18);
wobei ein Host-Betriebssystem (24) der ersten Verarbeitungseinheit (16) eine TLB-Spülroutine aufruft, wobei die Routine ausgelegt ist zum Spülen der TLBs von mindestens einem anderen Zentralverarbeitungseinheit-Kern;
das Host-Betriebssystem (24) einen flush_tlb-Hook an einen Treiber (26) der ersten Verarbeitungseinheit (16) sendet, um Callbacks für die zweite Verarbeitungseinheit (18) zu aktivieren;
der Treiber (26) der ersten Verarbeitungseinheit (16) prüft, ob irgendein aktiver Task denselben Speichermanager hat wie der eine, der gespült wurde, und, falls nicht, ansonsten den flush_tlb-Hook zurücksendet, falls ja, eine Nachricht (48) an das Betriebssystem (30) der zweiten Verarbeitungseinheit (18) sendet, wobei die Nachricht (48) einen Op-Code zum Ungültigmachen der Page und der Daten beinhaltet; und
wobei das Betriebssystem (30) der zweiten Verarbeitungseinheit (18) Spülen der zweiten Verarbeitungseinheit (18) durchführt.

2. Verfahren nach Anspruch 1, das gemeinsames Nutzen der Page-Tabelle zwischen der ersten (16) Verarbeitungseinheit und der zweiten (18) Verarbeitungseinheit beinhaltet.

3. Verfahren nach Anspruch 2, das Managen der Page-Tabelle unter Verwendung eines Betriebssystems der ersten Verarbeitungseinheit (16) beinhaltet.

4. Verfahren nach Anspruch 1, das Verwenden eines Betriebssystems der ersten Verarbeitungseinheit (16), um die Änderungen an einem Page-Tabellen-Eintrag zu verfolgen und die zweite Verarbeitungseinheit (18) zu benachrichtigen, wenn sich ein Page-Tabellen-Eintrag ändert, beinhaltet.

5. Verfahren nach Anspruch 1, wobei das Bestimmen, wann die zweite Verarbeitungseinheit (18) die Page-Tabelle verwendet, Bestimmen, wann eine Graphikverarbeitungseinheit die Page-Tabelle verwendet, beinhaltet.

6. Verfahren nach Anspruch 1, das Verwenden eines Gemeinsam-Genutzter-Virtueller-Speicher-Managers (32) beinhaltet, um die zweite Verarbeitungseinheit (18) zu benachrichtigen.

7. Nichtvergängliches computerlesbares Medium, das computerausführbare Anweisungen zum Freischalten einer ersten Verarbeitungseinheit (16), um das Verfahren nach Anspruch 1 auszuführen, speichert.

8. Medium nach Anspruch 7, das ferner computerausführbare Anweisungen zum gemeinsamen Nutzen der Page-Tabelle zwischen der ersten (16) und der zweiten (18) Verarbeitungseinheit speichert.

9. Medium nach Anspruch 8, das ferner computerausführbare Anweisungen speichert zum Verfolgen von Page-Tabellen-Änderungen unter Verwendung eines gemeinsam genutzten virtuellen Speichers und zum Melden dieser Änderungen an eine Graphikverarbeitungseinheit.

10. Medium nach Anspruch 7, das ferner computerausführbare Anweisungen speichert zum Verwenden eines Gemeinsam-Genutzter-Virtueller-Speicher-Managers, um die zweite Verarbeitungseinheit (18) zu benachrichtigen.

11. Vorrichtung, die Folgendes umfasst:
einen losgelösten virtuellen Speicher;
eine erste Verarbeitungseinheit (16) ausgelegt zum
Verfolgen von Änderungen an Einträgen in einer Page-Tabelle, Bestimmen, wann eine zweite Verarbeitungseinheit (18) die Page-Tabelle verwendet,
Benachrichtigen der zweiten Verarbeitungseinheit (18), wenn sich ein Page-Tabellen-Eintrag ändert, und
Spülen eines Übersetzungspuffers (im Folgenden: TLB) auf der zweiten Verarbeitungseinheit (18); wobei
ein Host-Betriebssystem (24) der ersten Verarbeitungseinheit (16) ausgelegt ist zum Aufrufen einer TLB-Spülroutine, wobei die Routine ausgelegt ist zum Spülen der TLBs von mindestens einem anderen Zentralverarbeitungseinheit-Kern;
das Host-Betriebssystem (24) ausgelegt ist zum Senden eines flush_tlb-Hook an einen Treiber (26) der ersten Verarbeitungseinheit (16), um Callbacks für die zweite Verarbeitungseinheit (18) zu aktivieren;
der Treiber (26) der ersten Verarbeitungseinheit (16) ausgelegt ist zum Prüfen, ob irgendein aktiver Task denselben Speichermanager hat wie der eine, der gespült wurde, und, falls nicht, ansonsten den flush_tlb-Hook zurücksendet, falls ja, eine Nachricht (48) an das Betriebssystem (30) der zweiten Verarbeitungseinheit (18) sendet, wobei die Nachricht (48) einen Op-Code zum Ungültigmachen der Page und der Daten beinhaltet; und wobei
das Betriebssystem (30) der zweiten Verarbeitungseinheit (18) ausgelegt ist zum Durchführen des Spülens der zweiten Verarbeitungseinheit (18); und
einen Speicher, der mit der ersten Verarbeitungseinheit (16) gekoppelt ist.

12. Vorrichtung nach Anspruch 11, wobei die erste Verarbeitungseinheit (16) eine Zentralverarbeitungseinheit ist.

13. Vorrichtung nach Anspruch 11, wobei die zweite Verarbeitungseinheit (18) eine Graphikverarbeitungseinheit ist.

14. Vorrichtung nach Anspruch 11, wobei die erste Verarbeitungseinheit (16) ausgelegt ist zum gemeinsamen Nutzen der Page-Tabelle zwischen der ersten Verarbeitungseinheit (16) und der zweiten Verarbeitungseinheit (18).

15. Vorrichtung nach Anspruch 12, wobei die erste Verarbeitungseinheit (16) ausgelegt ist zum Managen der gemeinsam genutzten Page-Tabelle und ein Betriebssystem umfasst, das ausgelegt ist zum Verfolgen der Änderungen und zum Benachrichtigen der zweiten Verarbeitungseinheit (18), wenn sich ein Page-Tabellen-Eintrag ändert.

16. Vorrichtung nach Anspruch 11, die einen Gemeinsam-Genutzter-Virtueller-Speicher-Manager beinhaltet, der ausgelegt ist zum Benachrichtigen der zweiten Verarbeitungseinheit (18).

## Revendications

1. Procédé, comprenant de :
partager une mémoire virtuelle non épinglée entre une première (16) et une seconde (18) unité de traitement pour :
utiliser la première unité de traitement (16) pour suivre des modifications d'entrées dans une table de pages,
déterminer le moment où la seconde unité de traitement (18) utilise la table de pages,
informer ladite seconde unité de traitement (18) lorsqu'une entrée de table de pages est modifiée, et
purger les répertoires des pages actives (ci-après : TLB) sur la seconde unité de traitement (18),
dans lequel un système d'exploitation hôte (24) de la première unité de traitement (16) appelle une routine de purge de TLB, la routine étant conçue pour purger les TLB d'au moins un autre coeur d'unité centrale de traitement ;
le système d'exploitation hôte (24) envoie un ancrage purger_tlb à un-pilote (26) de la première unité de traitement (16) pour activer des rappels pour la seconde unité de traitement (18) ;
le pilote (26) de la première unité de traitement (16) vérifie si une tâche active quelconque possède le même gestionnaire de mémoire que celle qui a été purgée et, dans le cas contraire, renvoie l'ancrage purger_tlb, sinon, si tel est le cas, envoie un message (48) au système d'exploitation (30) de la seconde unité de traitement (18), dans lequel le message (48) comprend un code d'opération pour invalider la page et les données ; et
dans lequel le système d'exploitation (30) de la seconde unité de traitement (18) exécute la purge de la seconde unité de traitement (18).

2. Procédé selon la revendication 1, comprenant de partager la table de pages entre lesdites première (16) et seconde (18) unités de traitement.

3. Procédé selon la revendication 2, comprenant de gérer ladite table de pages en utilisant un système d'exploitation de ladite première unité de traitement (16).

4. Procédé selon la revendication 1, comprenant d'utiliser un système d'exploitation de ladite première unité de traitement (16) pour suivre lesdites modifications d'une entrée de table de pages et pour informer la seconde unité de traitement (18) lorsqu'une entrée de table de pages est modifiée.

5. Procédé selon la revendication 1, dans lequel la détermination du moment où la seconde unité de traitement (18) utilise la table de pages comprend de déterminer le moment où une unité de traitement graphique utilise la table de pages.

6. Procédé selon la revendication 1, comprenant d'utiliser un gestionnaire de mémoire virtuelle partagée (32) pour informer ladite seconde unité de traitement (18).

7. Support lisible par ordinateur non transitoire stockant des instructions exécutables par ordinateur pour permettre à une première unité de traitement (16) d'exécuter le procédé selon la revendication 1.

8. Support selon la revendication 7, stockant en outre des instructions exécutables par ordinateur pour partager la table de pages entre lesdites première (16) et seconde (18) unités de traitement.

9. Support selon la revendication 8, stockant en outre des instructions exécutables par ordinateur pour suivre des modifications de table de pages en utilisant une mémoire virtuelle partagée et pour signaler ces modifications à une unité de traitement graphique.

10. Support selon la revendication 7, stockant en outre des instructions exécutables par ordinateur pour utiliser un gestionnaire de mémoire virtuelle partagée pour informer ladite seconde unité de traitement (18).

11. Appareil comprenant :
une mémoire virtuelle non épinglée ;
une première unité de traitement (16) configurée pour suivre des modifications d'entrées dans une table de pages, déterminer le moment où une seconde unité de traitement (18) utilise la table de pages, informer ladite seconde unité de traitement (18) lorsqu'une entrée de table de pages est modifiée et purger des répertoires de pages actives (ci-après : TLB) sur la seconde unité de traitement (18), dans lequel
un système d'exploitation hôte (24) de la première unité de traitement (16) est configuré pour appeler une routine de purge de TLB, la routine étant conçue pour purger les TLB d'au moins un autre coeur d'unité centrale de traitement ;
le système d'exploitation hôte (24) est configuré pour envoyer un ancrage purger_tlb à un pilote (26) de la première unité de traitement (16) pour activer des rappels pour la seconde unité de traitement (18) ;
le pilote (26) de la première unité de traitement (16) est configuré pour vérifier si une tâche active possède le même gestionnaire de mémoire que celle qui a été purgée et, dans le cas contraire, pour renvoyer l'ancrage purger_tlb, sinon, si tel est le cas, envoyer un message (48) au système d'exploitation (30) de la seconde unité de traitement (18), dans lequel le message (48) comprend un code d'opération pour invalider la page et les données ; et dans lequel
le système d'exploitation (30) de la seconde unité de traitement (18) est configuré pour exécuter la purge de la seconde unité de traitement (18) ; et
une mémoire couplée à ladite première unité de traitement (16).

12. Appareil selon la revendication 11, dans lequel ladite première unité de traitement (16) est une unité centrale de traitement.

13. Appareil selon la revendication 11, dans lequel ladite seconde unité de traitement (18) est une unité de traitement graphique.

14. Appareil selon la revendication 11, dans lequel ladite première unité de traitement (16) est configurée pour partager la table de pages entre ladite première unité de traitement (16) et ladite seconde unité de traitement (18).

15. Appareil selon la revendication 12, dans lequel ladite première unité de traitement (16) est configurée pour gérer ladite table de pages partagée et comprend un système d'exploitation qui est configuré pour suivre lesdites modifications et pour informer ladite seconde unité de traitement (18) lorsqu'une entrée de table de pages est modifiée.

16. Appareil selon la revendication 11, comprenant un gestionnaire de mémoire virtuelle partagée qui est configuré pour informer ladite seconde unité de traitement (18).
